# EUROPEAN PATENT APPLICATION

(11) **EP 4 826 981 A1**
(43) Date of publication of application: **21.10.2026**
(21) Application number: 26157153.3
(22) Date of filing: 09.02.2026
(51) Int. Cl.: H02M 7/42, B60L 50/51, B60L 58/20, H02M 1/00

(54) **MODULAR MULTI-LEVEL POWER ELECTRONICS SYSTEM FOR SUPPLYING MULTIPLE ELECTRIC MOTORS AND AUXILIARY LOADS**

(30) Priority: 07.02.2025 US 202563755317 P; 02.02.2026 US 202619466684
(71) Applicant: Magna International Inc., Aurora, ON L4G 7K1 (CA)
(72) Inventor: Zuo, Ying, L4G 7K1 Aurora, Ontario (CA); Anik, Animesh, L4G 7K1 Aurora, Ontario (CA); Korta, Philip, L4G 7K1 Aurora, Ontario (CA); Marktl, Johannes, L4G 7K1 Aurora, Ontario (CA); Winter, Martin, L4G 7K1 Aurora, Ontario (CA); Viana, Caniggia, L4G 7K1 Aurora, Ontario (CA); Kar, Narayan C., L4G 7K1 Aurora, Ontario (CA)
(74) Representative: Witte, Weller & Partner Patentanwälte mbB

(57) **Abstract**

An integrated motor drive (IMD) system includes: a modular multi-level inverter (MMI) including a plurality of integrated power modules, wherein each of the integrated power modules includes a battery and a power electronics assembly physically and electrically coupled to the battery and configured to generate AC power on a set of load terminals using direct current (DC) power from the one or more battery cells connected to a DC port of the integrated power module. The plurality of integrated power modules are split between a plurality of phase groups. An auxiliary power converter is configured to receive power from the MML inverter and to supply DC power to one or more auxiliary loads.

## Description

### FIELD

The present disclosure relates generally to power electronics for managing power to and from batteries and/or other DC power sources. The systems and methods of the present disclosure may have applications in electric vehicles and in non-vehicle systems.

### BACKGROUND

In conventional electric vehicle propulsion system, Lithium Ion (Li-ion) battery cells are packaged together in series and parallel configuration to develop a battery module, and a number of battery modules together create a complete battery pack. The battery pack is the main energy source connected to the motor and its drive system through DC link. Recently, Modular multi-level inverters (MMI) have been developed to provide integrated configuration, scalability, compact and efficient design. In this configuration, battery cells or modules are connected to each other through power electronics circuit such as full bridges, and half bridges which produce AC voltage to operate an electric motor (eMotor), such as a traction motor in an electrified vehicle. However, one of the main challenges with this configuration is to supply power to a secondary traction drive, a heating, ventilation, and air conditioning (HVAC) system and/or other auxiliary circuits.

### SUMMARY

The present disclosure provides an integrated motor drive (IMD) system. The IMD system comprises: a modular multi-level inverter including a plurality of integrated power modules, wherein each of the integrated power modules includes one or more battery cells and a power electronics assembly physically and electrically coupled to the one or more battery cells and configured to generate AC power on a set of load terminals using direct current (DC) power from the one or more battery cells connected to a DC port of the integrated power module. The plurality of integrated power modules are split between a plurality of phase groups, with each of the phase groups including a corresponding subset of the plurality of integrated power modules, with the sets of load terminals of the corresponding subset of the plurality of integrated power modules connected in a series arrangement between a lower node and an AC output conductor, with the AC output conductors of the plurality of phase groups together arranged to supply the AC power to a motor. The IMD system also includes a two-level inverter connected to the lower nodes of the plurality of phase groups and configured to generate a DC output power on a low-voltage (LV) DC bus.

The present disclosure also provides an integrated motor drive (IMD) system. The IMD system comprises: a plurality of DC/DC boost converters; and a modular multi-level inverter including a plurality of integrated power modules, wherein each of the integrated power modules includes one or more battery cells and a power electronics assembly physically and electrically coupled to the one or more battery cells and configured to generate AC power on a set of load terminals using direct current (DC) power from the one or more battery cells connected to a DC port of the integrated power module. The plurality of integrated power modules are split between a plurality of phase groups, with each of the phase groups including a corresponding subset of the plurality of integrated power modules, with the sets of load terminals of the corresponding subset of the plurality of integrated power modules connected in a series arrangement between a lower node and an AC output conductor, with the AC output conductors of the plurality of phase groups together arranged to supply the AC power to a motor. At least one integrated power module of each phase group of the plurality of phase groups includes the one or more battery cells therein connected to an input of a corresponding DC/DC boost converter of the plurality of DC/DC boost converters. The plurality of DC/DC boost converters are configured to supply DC power to an auxiliary load.

The present disclosure also provides an integrated motor drive (IMD) system. The IMD system comprises: a modular multi-level inverter (MMI) including a plurality of integrated power modules, wherein each of the integrated power modules includes one or more battery cells and a power electronics assembly physically and electrically coupled to the one or more battery cells and configured to generate AC power on a set of load terminals using direct current (DC) power from the one or more battery cells connected to a DC port of the integrated power module. The plurality of integrated power modules are split between a plurality of phase groups, with each of the phase groups including a corresponding subset of the plurality of integrated power modules, with the sets of load terminals of the corresponding subset of the plurality of integrated power modules connected in a series arrangement between a lower node and an AC output conductor, with the AC output conductors of the plurality of phase groups together arranged to supply the AC power to a motor. The IMD system also includes: a module neutral conductor connected to the lower node of at least one phase group of the plurality of phase groups; and an auxiliary power converter connected between the module neutral conductor and at least one of the AC output conductors and configured to receive an AC current therefrom.

These and other aspects of the present disclosure are disclosed in the following detailed description of the embodiments, the appended claims, and the accompanying figures

### BRIEF DESCRIPTION OF THE DRAWINGS

Further details, features and advantages of designs of the invention result from the following description of embodiment examples in reference to the associated drawings.
FIG. 1 shows a schematic block diagram of an electrical system in an electrified vehicle (EV), and in accordance with an aspect of the present disclosure;
FIGs. 2A-2B show a schematic diagram of a first integrated motor drive (IMD) system having a 3-phase modular multi-level inverter (MMI) in series with a two-level inverter, according to the present disclosure;
FIG. 3 shows a schematic diagram of a second IMD system having a 3-phase MMI configured to supply 3-phase power to an electric motor (eMotor) and a high voltage isolated rectifier, according to the present disclosure;
FIG. 4 shows a schematic diagram of an isolated DC/DC boost converter with dual outputs, according to the present disclosure;
FIG. 5 shows a schematic diagram of a third IMD system with a distributed DC/DC architecture, according to the present disclosure;
FIG. 6 shows a schematic diagram of a fourth IMD system with a MMI having a dual active bridge (DAB) configuration, according to the present disclosure;
FIG. 7A shows a graph illustrating motor currents generated by the fourth IMD system, according to the present disclosure;
FIG. 7B shows a graph illustrating high-voltage (HV) output voltages generated by the fourth IMD system, according to the present disclosure;
FIG. 8 shows a schematic diagram of a fifth IMD system with a MMI and a DC/DC converter, according to the present disclosure;
FIG. 9 shows a schematic diagram of a sixth IMD system with a MMI and a Vienna rectifier, according to the present disclosure;
FIG. 10 shows a schematic diagram of a seventh IMD system with a MMI, a rectifier connected to a 3-phase motor connection, and a two-level inverter, according to the present disclosure;
FIG. 11 shows a schematic diagram of an eighth IMD system having a 3-phase MMI with contactors for DC fast charging, according to the present disclosure;
FIG. 12A shows a schematic diagram illustrating current flow in a battery module of an MMI operating in an activated mode;
FIG. 12B shows a schematic diagram illustrating current flow in the battery module of an MMI operating in a bypassed mode;
FIG. 13 shows a schematic diagram of a battery module of an MMI having a boost converter, according to the present disclosure;
FIG. 14 shows a schematic diagram of a Vienna rectifier, according to the present disclosure; and
FIG. 15 shows a schematic diagram of a ninth IMD system having a switchbox configuration, according to the present disclosure.

### DETAILED DESCRIPTION

Referring to the drawings, the present invention will be described in detail in view of following embodiments.

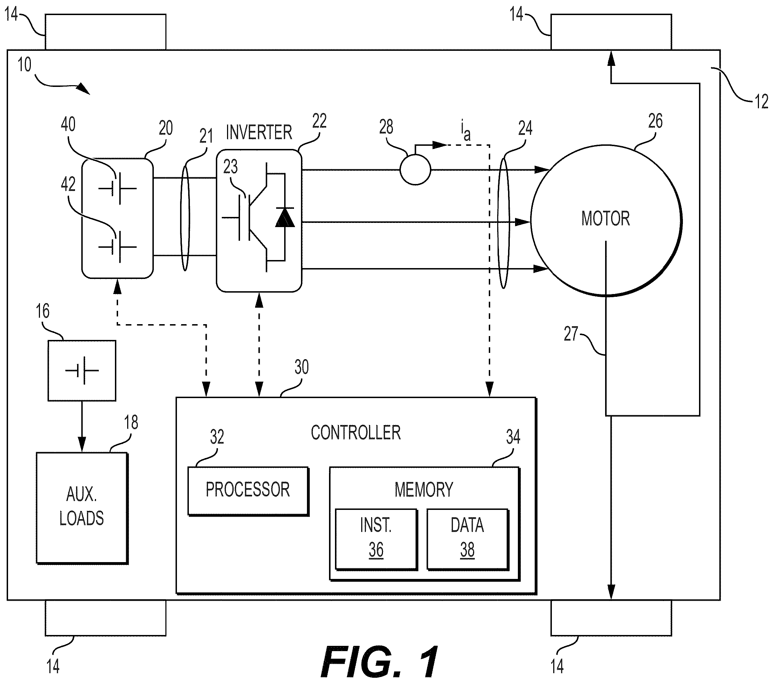

FIG. 1 shows a block diagram of an electrical system 10 for operating an electrified vehicle (EV). The EV may be configured as a battery electric vehicle (BEV), a plug-in hybrid electric vehicle (PHEV) or another type of hybrid electric vehicle that uses battery electric in combination with another source of energy for propulsion. The electrical system 10 is provided in a vehicle 12 having four wheels 14. The electrical system 10 includes a first battery 16 configured to supply power to one or more auxiliary loads 18. The axillary loads may include, low-power functional elements in the vehicle 12, such as heating ventilation and air conditioning (HVAC) motors, lighting loads, such as headlights and tail lights, power steering and power brake motors, seat heaters, electrical control units (ECUs), seat actuators, window actuators, etc. The first battery 16 may be configured as a low-voltage battery, which may have an operating voltage of, for example, 12-Volts, 24-Volts, 36-Volts, 42-Volts, or 48-Volts.

The electrical system 10 also includes a traction power source 20 that is configured to supply electrical power to an inverter 22 via a DC bus 21 for driving one or more traction motors 26 for propelling the vehicle 12. The traction power source 20 includes a second electrical energy storage device 40, which may be configured as a high-capacity main battery. Additionally or alternatively, the second electrical energy storage device 40 may include one or more capacitors.

The traction power source 20 also includes a third electrical energy storage device 42, which may be configured as a high-performance boost battery that is capable of delivering relatively high output power for a short duration of time. In some embodiments, the third electrical energy storage device 42 includes a battery, which may have a different chemistry than the first battery 16 and/or the second electrical energy storage device 40. Alternatively or additionally, the third electrical energy storage device 42 may include one or more capacitors, which may include super capacitors. The second electrical energy storage device 40 and/or the third electrical energy storage device 42 may have a relatively higher voltage, such as 400 Volts Direct Current (VDC) or 800 VDC.

The inverter 22 may include at least three pairs of solid-state switches 23, such as field effect transistors (FETs) configured to switch current from the DC bus 21 and to generate an AC power upon a set of motor leads 24. The motor leads 24 transmit electrical power between the inverter 22 and a traction motor 26. The traction motor 26 may be a permanent magnet synchronous motor (PMSM). The traction motor 26 may be used as a motor, a generator, or as a motor/generator that functions as both a motor and a generator. The traction motor 26 may include an output shaft 27 that is coupled, either directly or via a transmission or gearbox (not shown in the FIGs), to one or more of the wheels 14 of the vehicle 12 for driving the vehicle 12.

A current sensor 28 is arranged to measure current in one or more of the motor leads 24. In some embodiments, and as shown on FIG. 1, the current sensor 28 measures an A-phase current iₐ, on a corresponding one of the motor leads 24. However, the electrical system 10 may measure current on two or more of the motor leads 24. The electrical system 10 may include other sensors, such as voltage sensors configured to measure voltages upon or between the motor leads 24. If voltage sensors are available, they can be used as inputs for the provided approach.

The electrical system 10 of FIG. 1 also includes an electronic control unit (ECU) 30, which may also be called a governing controller, in communication with the current sensor 28 to measure the currents in the motor leads 24. The ECU 30 may also be in functional communication with the inverter 22 to control operation of the inverter 22 and/or to monitor parameters measured by sensors associated with the inverter 22. The ECU 30 includes a processor 32 coupled to a storage memory 34. The storage memory 34 stores instructions, such as program code for execution by the processor 32, in an instruction storage 36. The storage memory 34 also includes data storage 38 for holding data to be used by the processor 32. The data storage 38 may record, for example, values of the parameters measured by the current sensor 28 and/or the outcome of functions calculated by the processor 32.

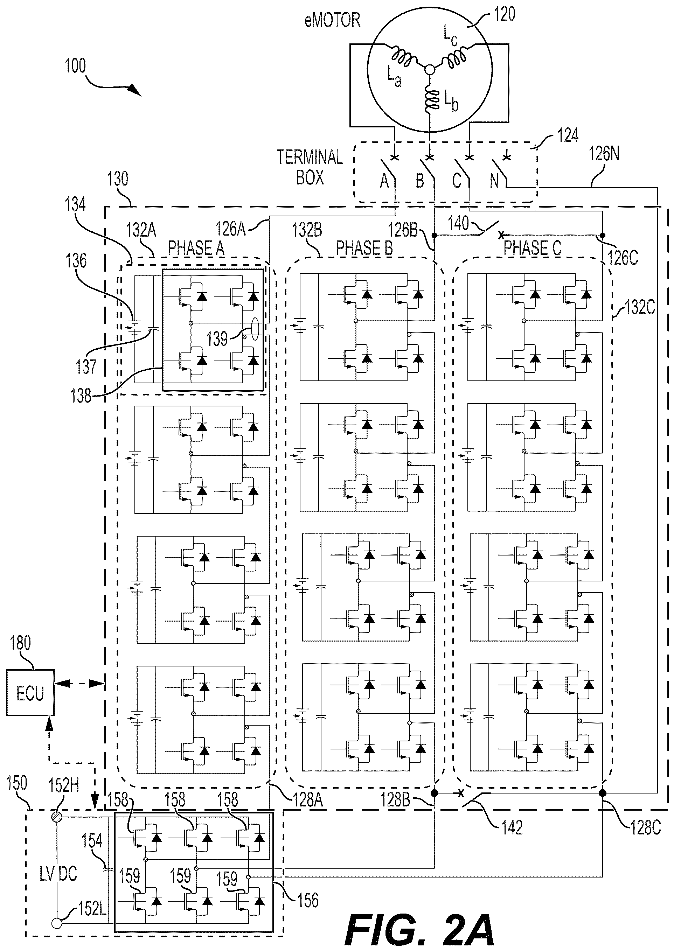

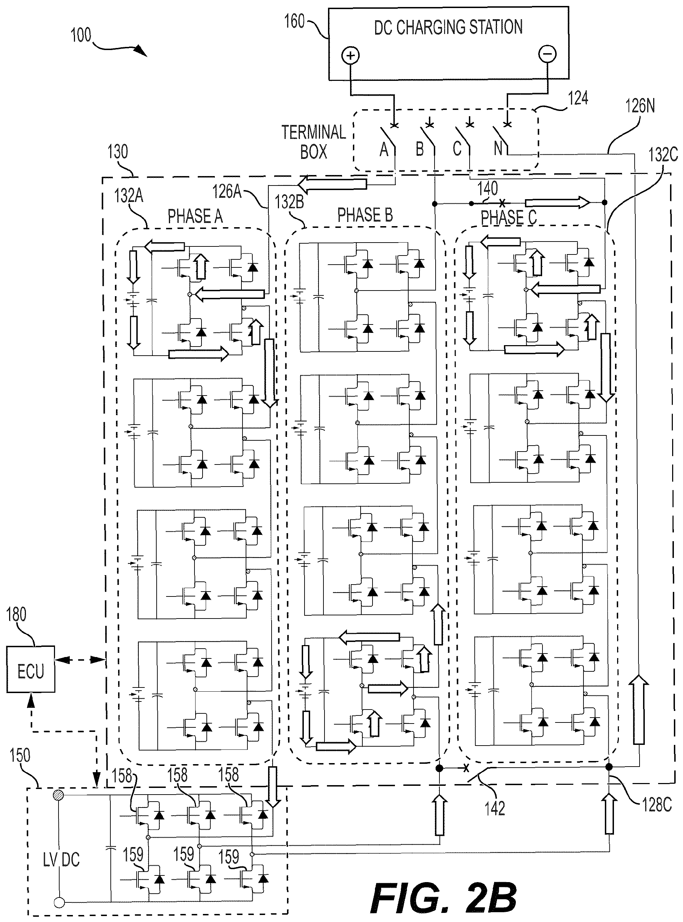

FIGs. 2A-2B each show a schematic diagram of a first integrated motor drive (IMD) system 100. FIG. 2A shows the first IMD system 100 with a first modular multi-level inverter (MMI) configured for providing power to a first electric motor (eMotor) 120 having a 3-phase arrangement with windings *La, Lb, Lc* arranged in a Wye configuration. The first eMotor 120 may be used as the traction motor 26 for generating a torque used to accelerate the vehicle 12. Alternatively, the first eMotor 120 may be used for other purposes. FIG. 2B shows the first IMD system 100 with the first MMI 130 configured to receive power from a DC charging station 160, which may provide a high-voltage DC power for charging batteries in the first MMI 130.

The first MMI 130 is configured to supply the first eMotor 120 with 3-phase power via a first terminal box 124. The first IMD system 100 also includes a first two-level inverter 150 configured to supply a low-voltage DC power on a low-voltage (LV) direct current (DC) link 152h, 1521. The low-voltage DC power supplied by the first two-level inverter 150 may be used to power one or more auxiliary loads in a vehicle, such as electronic control modules, small actuator motors, etc.

The first MMI 130 shown in FIGs. 2A-2B includes three phase groups 132a, 132b, 132c, each generating a single-phase of AC power for application to a corresponding stator winding of the first eMotor 120 via the first terminal box 124, which may also be called an AC bus connector. Each of the phase groups 132a, 132b, 132c includes several integrated power modules 134 in a series configuration. Each of the integrated power modules 134 may have a similar or identical configuration.

In some embodiments, and as shown FIGs. 2A-2B, each of the integrated power modules 134 may be configured as primary modules, including a battery module 136. The battery module 136 may have a 90-V nominal voltage. However, the battery module 136 may have a different voltage, such as 12V, 24V, or 48V. Additionally or alternatively, some of the integrated power modules 134 may be configured as secondary modules, which do not contain a battery, but instead are connected to an external battery.

Each of the integrated power modules 134 includes a first input capacitor 137, and a first power electronics assembly 138. The first power electronics assembly 138 may be physically and electrically coupled to the first battery module 136 and configured to receive direct current (DC) power therefrom and to generate alternating current (AC) power on a set of first load terminals 139, using the DC power from the first battery module 136. In some embodiments, each of the first power electronics assemblies 138 may include four switching transistors in an H-bridge configuration.

The first load terminals 139 of the integrated power modules 134 within each of the phase groups 132a, 132b, 132c are connected together in the series configuration to generate AC output power on a corresponding first AC output conductor 126a, 126b, 126c. Each of the phase groups 132a, 132b, 132c also defines a corresponding first lower node 128a, 128b, 128c, opposite of the first AC output conductors 126a, 126b, 126c. In other words, first load terminals 139 of the integrated power modules 134 within each of the phase groups 132a, 132b, 132c are connected in the series configuration between a first lower node 128a, 128b, 128c and a corresponding one of the first AC output conductors 126a, 126b, 126c. Thus, the phase groups 132a, 132b, 132c may provide the 3-phase AC power. The series connection of the integrated power modules 134 enables each of the phase groups 132a, 132b, 132c to provide the AC output power with power and/or voltage ratings many times greater than can be supplied by any one of the integrated power modules 134, alone.

The first MMI 130 shown in FIGs. 2A-2B also includes a module neutral conductor 126n, which may serve as a reference conductor and/or as a current carrying conductor for a single-phase load connected to one of the first AC output conductors 126a, 126b, 126c.

The first two-level inverter 150 is connected to the first lower nodes 128a, 128b, 128c of the first MMI 130 and defines a low-voltage (LV) direct current (DC) bus 152h, 1521 including a DC high node 152h and a DC low node 1521. The first two-level inverter 150 also includes an output capacitor 154 connected across the low-voltage bus 152h, 1521, and an active power converter 156 including transistors configured to selectively conduct current between each of the first lower nodes 128a, 128b, 128c and each of the DC high node 152h and the DC low node 1521 in order to generate a regulated DC output power on the LV DC bus 152h, 1521.

More specifically, the first two-level inverter 150 includes a plurality of high-side switching devices 158, such as MOSFET devices, each configured to selectively conduct current between a corresponding one of the first lower nodes 128a, 128b, 128c and the DC high node 152h. The first two-level inverter 150 also includes a plurality of low-side switching devices 159, such as MOSFET devices, each configured to selectively conduct current between a corresponding one of the first lower nodes 128a, 128b, 128c and the DC low node 1521.

The first IMD system 100 also includes a first set of contacts 140 configured to selectively connect the b-phase AC output conductor 126b with the c-phase AC output conductor 126c. The c-phase lower node 128c is connected to the module neutral conductor 126n. The first IMD system 100 also includes a second set of contacts 142 configured to selectively connect the b-phase first lower node 128b to the module neutral conductor 126n. The contactors 140, 142 may function to connect the b and c phase groups 132b, 132c in series for DC fast charging, and the 2-level inverter 150 supports the auxiliary circuits and battery management system.

The first set of contacts 140 and the second set of contacts 142 may be selectively commanded by the ECU 180 to convert the three phase groups 132a, 132b, 132c to a series connection and which is connected between a positive DC terminal and a negative DC terminal of a DC charging station 160 for DC charging. The ECU 180 may also control operation of the high-side switching devices 158 and the low-side switching devices 159 in the first two-level inverter 150 for directing current therethrough during DC charging. Arrows on FIG. 2B indicate current flow through the first IMD system 100 during DC fast charging. This is one possible connection, but the contacts 140, 142 can be reconfigured to other locations to achieve the same effect of converting the three phase groups 132a, 132b, 132c to a series connection during DC charging. This methodology is applicable to any number of phase groups 132a, 132b, 132c; however, a higher number of contactors would be required with an increased number of phase groups 132a, 132b, 132c. For example, a six-phase system may require 4 contactors in total.

The first IMD system 100 exemplifies a power converter topology having an MMI connected in series with a two-level inverter, as shown in FIGs. 2A-2B. The first MMI 130 may be modulated to control current flowing through the first eMotor 120 and may compensate for any voltage that the first two-level inverter 150 may apply. The first two-level inverter 150 may be modulated to produce voltage to extract current & power necessary to control a voltage at the LV DC link. The LV power demand is drawn from the MMI battery modules 134 and shared by full-bridge circuits 138 of the first MMI 130.

The battery modules 134 or cells per phase are connected in series through a half or full-bridge circuits in an MMI. The battery modules/cells are interlinked, therefore, utilizing the upper battery modules to supply an auxiliary circuit without an isolation transformer that could otherwise create a short circuit path if the first two-level inverter 150 is not positioned at the bottom level of the MMI topology. On the other hand, an additional transformer would increase the cost significantly. However, the last module is isolated as it is connected to the neutral. Therefore, additional half bridge circuits may be connected to the lower nodes 128a, 128b, 128c of every phase groups 132a, 132b, 132c to regulate the voltage as a buck converter.

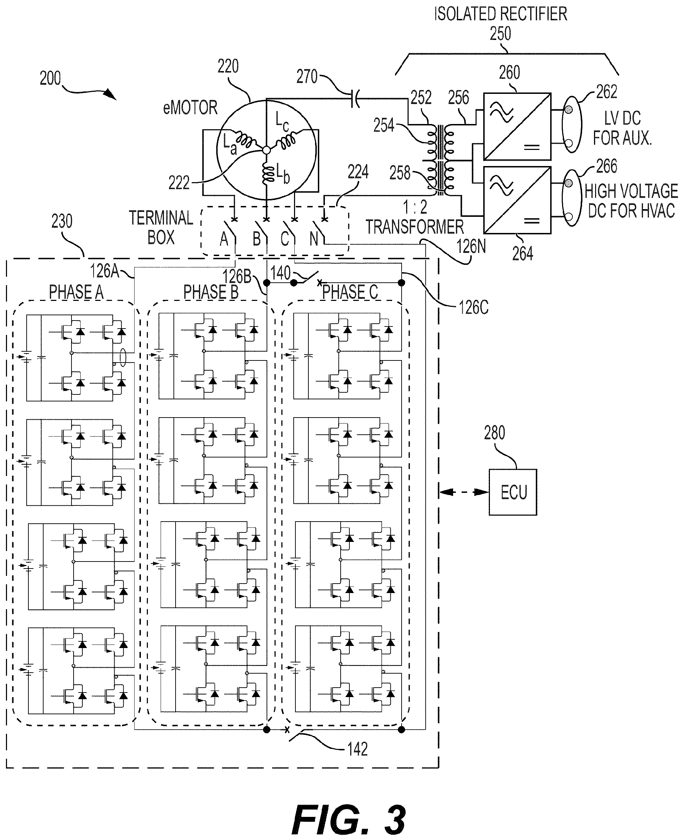

The first IMD system 100 also includes a first electronic control unit (ECU) 180, which may be similar or identical to the ECU 30, and which is configured to control operation of the first MMI 130 and/or the first two-level inverter 150. The first ECU 180 may receive signals for monitoring currents and/or voltages in the first IMD system 100. The first ECU 180 may also send output commands for controlling conductive states of transistors in the first MMI 130 and/or the first two-level inverter 150.FIG. 3 shows a schematic diagram of a second IMD system 200 configured to supply 3-phase power to a second eMotor 220 and an isolated rectifier 250, according to the present disclosure. The second IMD system 200 may be similar or identical to the first IMD system 100 except for differences described herein. The second eMotor 220 may be used as the traction motor 26 for generating a torque used to accelerate the vehicle 12. Alternatively, the second eMotor 220 may be used for other purposes.

The second IMD system 200 includes a second MMI 230, which may be similar or identical to the first MMI 130, and which is configured to supply 3-phase AC power to the second eMotor 220 via a second terminal box 224. The second eMotor 220 may be similar or identical to the first eMotor 120, including a 3-phase arrangement with motor windings *La, Lb, Lc* arranged in a Wye configuration. The second eMotor 220 also includes a center terminal 222 connected to each of the motor windings *La, Lb, Lc* opposite the first AC output conductors 126a, 126b, 126c.

The second IMD system 200 also includes an additional traction to auxiliary circuit 250, 270 that is configured to supply one or more DC loads. The traction to auxiliary circuit 250, 270 receives power from conductors connected between the center terminal 222 of the motor 220 and the module neutral conductor 126n of the second MMI 230, which produces an AC voltage. The traction to auxiliary circuit 250, 270 includes an isolated rectifier 250 having a transformer 252 with a primary winding 254 and two isolated secondary windings 256, 258. The transformer 252 may define a 1:2 winding ratio between the primary winding 254 and each of the two isolated secondary windings 256, 258. The traction to auxiliary circuit 250, 270 also includes an input capacitor 270 that is connected between the center terminal 222 of the motor 220 and the primary winding 254 of the transformer 252. The primary winding 254 of the transformer 252 is also connected to the module neutral conductor 126n of the second MMI 230, via the second terminal box 224. The isolated rectifier 250 also includes a first power converter 260 connected to a first secondary winding 256 of the transformer 252 and configured to generate DC power on a first DC output bus 262, which may be a low-voltage (LV) DC power for auxiliary loads. The isolated rectifier 250 also includes a second power converter 264 connected to a second secondary winding 258 of the transformer 252 and configured to generate DC power on a second DC output bus 266, which may be a high-voltage DC power for HVAC loads.

The voltage on the secondary windings 256, 258 may be dependent on a modulation index of the second MMI 230 and an injected switching angle Δ. The transformer 252 with a single primary and multiple secondary windings is used to boost or buck the voltage to an appropriate magnitude for the LV and HV busses 262, 266. In this case the secondary has two separate windings, one to boost the voltage to a high voltage for HVAC system or other HV components, and the second to buck the voltage to a low voltage for auxiliary LV loads. Converters are used on each of the transformer secondary outputs to rectify the AC voltage and regulate the DC voltage to appropriate levels. The full-bridges of the second MMI 230 are used to control the voltage applied to the primary winding 254 of the transformer 252.

It is also possible to create one HV bus from a single secondary winding 256, 258 of the transformer 252 to directly supply HV loads and use the following options for LV supply with this configuration: a HV to LV converter connected to the HV dc link to supply low-voltage auxiliary loads; and/or a two-level inverter, such as the first two-level inverter 150, to supply LV loads.

The second IMD system 200 also includes a second ECU 280, which may be similar or identical to the ECU 30, and which is configured to control operation of the second MMI 230 and/or the isolated rectifier 250. The second ECU 280 may receive signals for monitoring currents and/or voltages in the second IMD system 200. The second ECU 280 may also send output commands for controlling conductive states of transistors in the second MMI 230 and/or isolated rectifier 250.

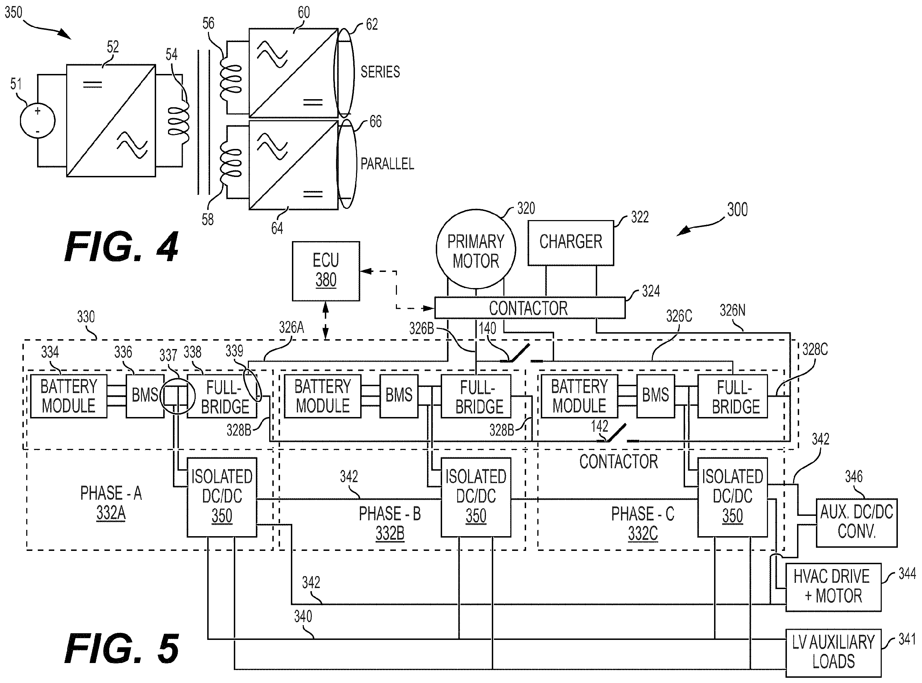

According to an aspect of the disclosure, the isolated rectifier 250 may be split into two separate converters or use a shared primary winding, as illustrated in FIGs. 3 and 4, which may reduce component count and cost.

According to an aspect of the disclosure, the isolated rectifier 250 may include a single output without the parallel connection and just use the series output to create a HV bus. Such an arrangement may provide a low-voltage supply using an HV to LV converter connected to the secondary dc link to supply low-voltage auxiliary loads. Alternatively or additionally, a two-level inverter 150 maybe used to supply LV loads

According to an aspect of the disclosure, a power converter could be placed on each battery module in the system to distribute the load evenly between all battery modules.

According to an aspect of the disclosure, some subset of the integrated power modules 134 can be equipped with the converters to reduce a total number of converters and component count. The load imbalance from the uneven distribution could be compensated by the inter and intra phase SoC balancing control of the Full bridge converters 138 when operating the eMotor 120.

FIG. 4 shows a schematic diagram of an isolated DC/DC boost converter 350 with a single input and dual outputs. The isolated DC/DC boost converter 350 converts power between a DC source 51 and two DC output ports 62, 66. The isolated DC/DC boost converter 350 includes a first power converter 52 connected between the DC source 51 and a primary winding 54 of a transformer. The isolated DC/DC boost converter 350 also includes a second power converter 60 connected between a first secondary winding 26 that is magnetically coupled with the primary winding 54, and a first DC output port 62 of the two DC output ports 62, 66. The isolated DC/DC boost converter 350 also includes a third power converter 64 connected between a second secondary winding 58 that is magnetically coupled with the primary winding 54, and a second DC output port 66 of the two DC output ports 62, 66.

FIG. 5 shows a schematic diagram of a third IMD system 300 with a distributed DC/DC architecture.

The third IMD system 300 is configured to supply 3-phase power to a third eMotor 320. The third eMotor 320 may be used as the traction motor 26 for generating a torque used to accelerate the vehicle 12. Alternatively, the third eMotor 320 may be used for other purposes. The third IMD system 300 includes a third MMI 330, which may be similar or identical to the first MMI 130, and which is configured to supply 3-phase AC power to the third IMD system 300 eMotor 320 and/or a charger 322 via a third terminal box 324. The third eMotor 320 may be similar or identical to the first eMotor 120. The third MMI 330 shown in FIG. 5 includes three third phase groups 332a, 332b, 332c, each generating a single-phase of AC power on a corresponding third AC output conductor 326a, 326b, 326c for application to a corresponding stator winding of the third eMotor 320 via the third terminal box 324. The third MMI 330 also defines a third module neutral conductor 326n, which may serve as a reference conductor and/or as a current carrying conductor for a single-phase load connected to one of the third AC output conductors 326a, 326b, 326c. The third terminal box 324 may include a contactor for selectively connecting the third MMI 330 to the third eMotor 320 and/or the charger 322. For example, the contactor of the third terminal box 324 may disconnect the third eMotor 320 and connect the charger 322 to the third MMI 330 when the vehicle 12 is plugged-in for charging the batteries.

Each of the three third phase groups 332a, 332b, 332c may have a similar or identical construction, and only the a-phase group 332a of the three third phase groups 332a, 332b, 332c is described for simplicity of the disclosure. The a-phase group 332a includes a third battery module 334 having a plurality of battery cells. A battery management system (BMS) 336 is connected to the plurality of battery cells of the third battery module 334 for controlling charging and/or discharging of the plurality of battery cells. The BMS 336 may include functionality to monitor the battery cells in the third battery module 334, individually or in groups. The BMS 336 may provide cell balancing and/or other protection functionality for the battery module 334. The BMS 336 defines an internal DC bus 337 for conveying DC power to and from the battery module 334.

The a-phase group 332a also includes a full-bridge power converter 338, which may be similar or identical to the first power electronics assembly 138, and which is configured to generate AC power on a set of third load terminals 339 using DC power from the third battery module 334 and as transmitted via the internal DC bus 337.

The third load terminals 339 of each of the third phase groups 332a, 332b, 332c are arranged to generate AC output power between a corresponding third lower node 328a, 328b, 328c and a corresponding one of the third AC output conductors 326a, 326b, 326c. Thus, the third phase groups 332a, 332b, 332c may provide the 3-phase AC power.

The third IMD system 300 also includes a first set of contacts 140 configured to selectively connect the b-phase AC output conductor 326b with the c-phase AC output conductor 326c. The c-phase lower node 328c is connected to the module neutral conductor 326n. The third IMD system 300 also includes a second set of contacts 142 configured to selectively connect the b-phase first lower node 328b to the module neutral conductor 326n. The contacts 140, 142 may function to connect the phases B and C in series with phase A for DC fast charging.

The distributed DC/DC architecture of the third IMD system 300 includes an isolated DC/DC boost converter 350 connected to each battery module in each phase. The isolated DC/DC boost converter 350 provides two output ports 62, 66, as shown in FIG. 4. The second DC output ports 66 of the isolated DC/DC boost converters 350 are connected in parallel to form an LVDC bus 340 and to share the load of one or more auxiliary components 341 connected thereto. The auxiliary components 341 may include, for example, low-power functional elements in the vehicle 12, such as heating ventilation and air conditioning (HVAC) motors, lighting loads, such as headlights and tail lights, power steering and power brake motors, seat heaters, electrical control units (ECUs), seat actuators, window actuators, etc. This is shown in the simplified system architecture in FIG. 5, which has just one module per phase for ease of illustration. The power level may be determined as the LV system power requirement divided by a number of the isolated DC/DC boost converters 350.

The first DC output ports 62 of the isolated DC/DC boost converters 350 are placed in series to create a HV DC bus 342. The voltage of each of the first DC output ports 62 may be determined based on the HV voltage requirement divided by the number of the isolated DC/DC boost converters 350 in the system. Similarly, the power rating of the series output is HV system power requirement divided by the number of the isolated DC/DC boost converters 350 in the system. The HV bus 342 can be used to directly supply HV loads, such as a HVAC motor drive 344. Additionally or alternatively, the HV bus 342 can be connected to an auxiliary HV to LV DCDC converter 346 to supply one or more auxiliary loads.

The third IMD system 300 includes also includes a third ECU 380, which may be similar or identical to the ECU 30, and which is configured to control operation of the third MMI 330, the third terminal box 324, the isolated DC/DC boost converters 350 in the third IMD system 300 and/or the auxiliary HV to LV DCDC converter 346. The third ECU 380 may receive signals for monitoring currents and/or voltages in the third IMD system 300. The third ECU 380 may also send output commands for controlling conductive states of switching devices, such as transistors, in the third MMI 330, the third terminal box 324, the isolated DC/DC boost converters 350 in the third IMD system 300 and/or the auxiliary HV to LV DCDC converter 346.

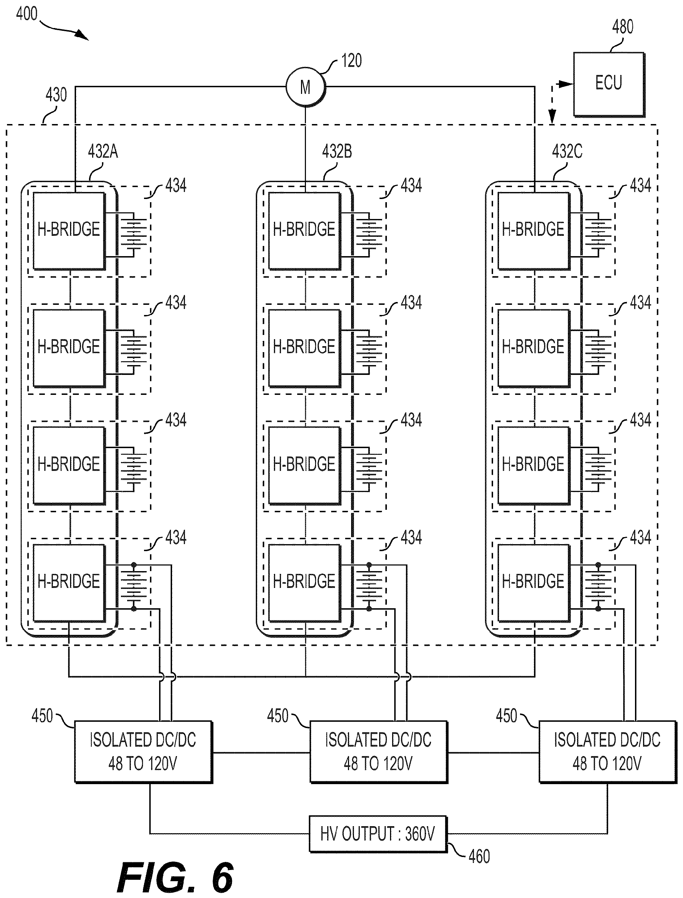

FIG. 6 shows a schematic diagram of a fourth IMD system 400 with an MMI having a dual active bridge (DAB) configuration, according to the present disclosure. The fourth IMD system 400 includes a fourth MMI 430, which may be similar or identical to the first MMI 130, and which is configured to supply 3-phase power to a fourth eMotor 420, which may be used as the traction motor 26 for generating a torque used to accelerate the vehicle 12. Alternatively, the fourth eMotor 420 may be used for other purpose. The fourth eMotor 420 may be similar or identical to the first eMotor 120. The second eMotor 220

The fourth MMI 430 shown in FIG. 6 includes three phase groups 432a, 432b, 432c, each generating a single-phase of AC power for application to a corresponding stator winding of the fourth eMotor 420. Each of the phase groups 432a, 432b, 432c includes several integrated power modules 434 in a series configuration. Each of the integrated power modules 434 may have a similar or identical configuration, which may also be similar or identical to the integrated power modules 134 of the first MMI 130 shown in FIGs. 2A-2B and described, above.

An isolated DC/DC boost converter 450 is connected to a battery of a last one of the integrated power modules 434 in each of the phase groups 432a, 432b, 432c to create a high-voltage DC bus 460. This high-voltage DC bus 460 can then be used as a power source for auxiliary loads, the HVAC system, and a secondary motor. This design is cost-effective because it requires only three DC/DC converters to establish the high-voltage DC bus, rather than connecting a converter to each individual battery module. During operation, the state of charge (SOC) balancing mechanism may work to eliminate power usage imbalances between the battery modules of the integrated power modules 434, ensuring efficient energy distribution without the need to connect a DC/DC converter to every module. This approach not only reduces costs but also simplifies the overall system architecture, enhancing reliability and ease of maintenance.

The fourth IMD system 400 also includes a fourth ECU 480, which may be similar or identical to the ECU 30, and which is configured to control operation of the fourth MMI 430 and/or the isolated DC/DC boost converters 450. The fourth ECU 480 may receive signals for monitoring currents and/or voltages in the fourth IMD system 400. The fourth ECU 480 may also send output commands for controlling conductive states of transistors in the fourth MMI 430 and/or the isolated DC/DC boost converters 450.

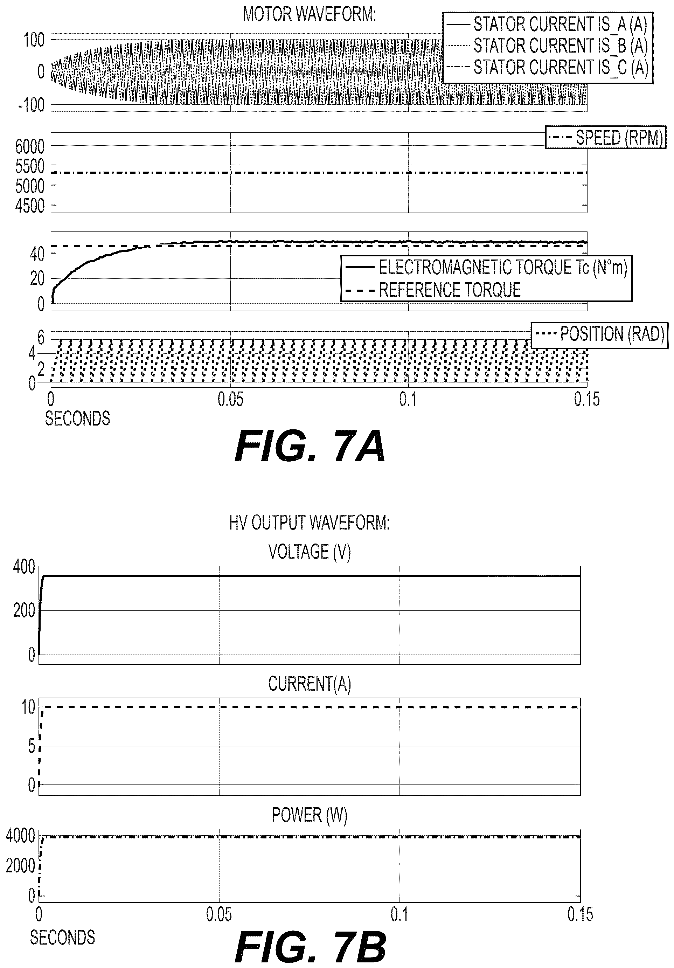

FIG. 7A shows a graph illustrating motor currents generated by the fourth IMD system 400, and FIG. 7B shows a graph illustrating high-voltage (HV) output voltages generated by the fourth IMD system 400. FIGs. 6A-6B may represent simulation results that show the normal operation of the primary motor and the stable high-voltage DC bus output. The ability to maintain a stable high-voltage DC bus ensures that all connected systems, including auxiliary loads and the HVAC system, receive a reliable power supply, thereby improving the overall functionality and longevity of the vehicle's electrical system.

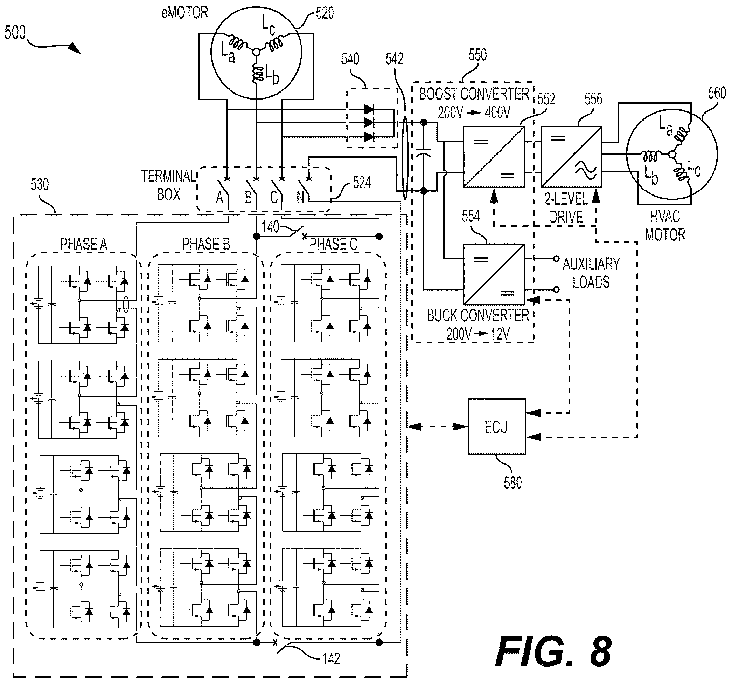

FIG. 8 shows a schematic diagram of a fifth IMD system 500 with a fifth MMI 530 and a DC/DC converter 550, according to the present disclosure. The fifth IMD system 500 includes a fifth MMI 530, which may be similar or identical to the first MMI 130, and which is configured to supply 3-phase AC power to the fifth eMotor 520 via a fifth terminal box 524. The fifth eMotor 520 may be similar or identical to the first eMotor 120, including a 3-phase arrangement with motor windings *La, Lb, Lc* arranged in a Wye configuration.

The fifth IMD system 500 includes a half-bridge rectifier 540 connected between the three-phase and neutral terminals of the fifth MMI 530, and which creates a secondary HV DC link 542. The secondary HV DC link 542 is half of the total DC string voltage at the fifth MMI 530, where string voltage is the sum of all battery module voltages in one phase. Therefore, a boost converter 552 is included to supply high voltage if the voltage requirement of the HV system is larger than half of the MMI string voltage. The boost converter 552 may be connected to a two-level drive 556 to generate another 3-phase power for supply to a fifth HVAC motor 560, such as a blower motor or a compressor motor, or any other HV loads.

The fifth IMD system 500 may provide several low-voltage supply options, including an HV to LV converter 554 is connected to the secondary DC link 542 to supply low-voltage auxiliary loads. Alternatively or additionally, a two-level inverter can be used to supply LV loads.

The fifth IMD system 500 also includes a fifth ECU 580, which may be similar or identical to the ECU 30, and which is configured to control operation of the fifth MMI 530 and/or the DC/DC converter 550. The fifth ECU 580 may receive signals for monitoring currents and/or voltages in the fifth IMD system 500. The fifth ECU 580 may also send output commands for controlling conductive states of transistors in the fifth MMI 530 and/or the DC/DC converter 550.

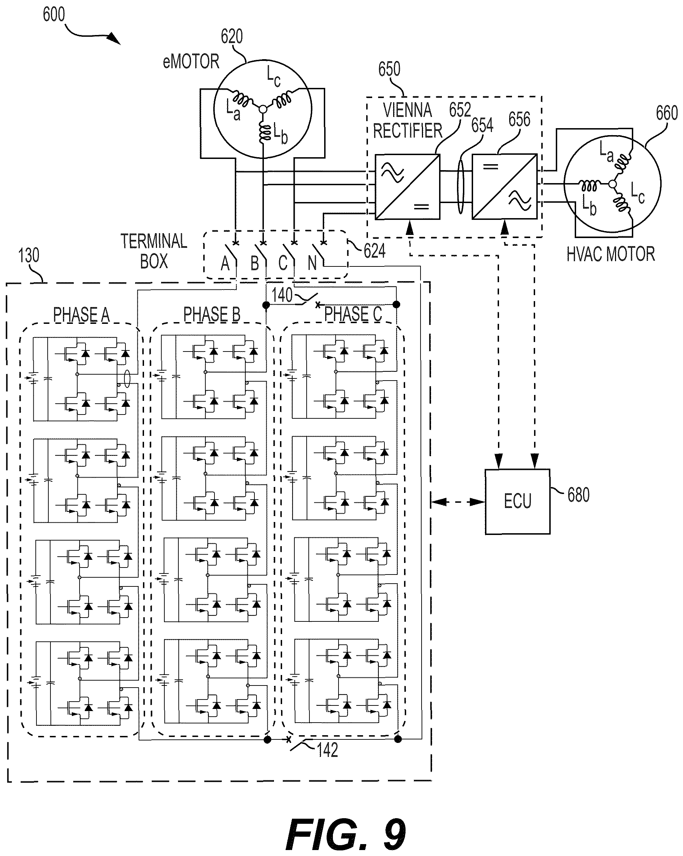

FIG. 9 shows a schematic diagram of a sixth IMD system 600 with a MMI and a Vienna rectifier 652, according to the present disclosure. The sixth IMD system 600 includes a sixth MMI 630, which may be similar or identical to the first MMI 130, and which is configured to supply 3-phase AC power to the sixth eMotor 620 via a sixth terminal box 624. The sixth eMotor 620 may be similar or identical to the first eMotor 120, including a 3-phase arrangement with motor windings *La, Lb, Lc* arranged in a Wye configuration.

In the sixth IMD system 600, the three-phase output terminal of MMI is connected to a Vienna rectifier 652. The Vienna rectifier 652 converts AC power to DC power and utilizes the three-phase common mode voltage. The Vienna rectifier 652 can utilize the full string voltage of the MMI. The Vienna rectifier 652 may define a secondary DC link 654 having a DC regulated DC voltage thereupon. The secondary DC link 654 may be connected to a conventional two-level inverter 656 and operate a sixth HVAC motor 660 or any other HV loads. The modulation of the MMI is maintained at maximum level to maintain maximum voltage at the secondary dc link.

The sixth IMD system 600 may provide several low voltage supply options, including: a HV to LV converter 650 is connected to the secondary dc link to supply low-voltage auxiliary loads. Alternatively or additionally, a two-level inverter can be used to supply LV loads.

The sixth IMD system 600 also includes a sixth ECU 680, which may be similar or identical to the ECU 30, and which is configured to control operation of the sixth MMI 630, the HV to LV converter 650, and/or the two-level inverter (not shown on FIG. 9). The sixth ECU 680 may receive signals for monitoring currents and/or voltages in the sixth IMD system 600. The sixth ECU 680 may also send output commands for controlling conductive states of transistors in the sixth MMI 630, the HV to LV converter 650, and/or the two-level inverter (not shown on FIG. 9).

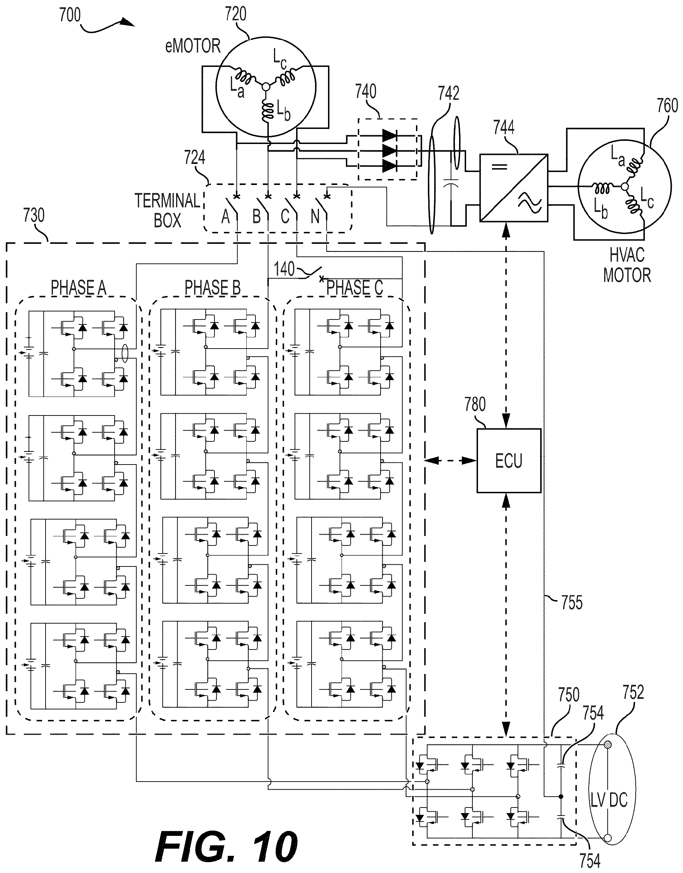

FIG. 10 shows a schematic diagram of a seventh IMD system 700 with a MMI, a rectifier connected to a 3-phase motor connection, and a two-level inverter, according to the present disclosure. The seventh IMD system 700 includes a seventh MMI 730, which may be similar or identical to the first MMI 130, and which is configured to supply 3-phase AC power to a seventh eMotor 720 via a seventh terminal box 724. The seventh eMotor 720 may be similar or identical to the first eMotor 120, including a 3-phase arrangement with motor windings *La, Lb, Lc* arranged in a Wye configuration.

The seventh IMD system 700 combines both high voltage HVAC and low voltage system suppling from the same MMI. The end terminals of the MMI phases (i.e. the terminals connected to the motor windings of the seventh eMotor 720) are connected to three half-bridges 740 to supply low-voltage auxiliary loads. As shown, the three half-bridges 740 may include diodes connected between each of end terminals of the MMI phases and a common output node. Alternatively, the three half-bridges 740 may include switching devices, such as transistors, configured to actively rectify current, and to thereby function as a synchronous rectifier.

The seventh IMD system 700 also includes a seventh 2-level inverter 750, which may be similar or identical to the first 2-level inverter 150, and which defines an LV DC link 752. Two output capacitors 754 are connected in series across the LV DC link 752 and define a neutral point 755 therebetween.

The neutral point 755 of the LV DC link 752, and the common output node of the three half-bridges 740, together define a secondary HV dc link 742. A two-level drive 744 is connected to the secondary HV dc link 742 and is configured to generate another 3-phase power for supply to a seventh HVAC motor 760, such as a blower motor or a compressor motor.

The seventh IMD system 700 may provide several low voltage supply options, including: a HV to LV converter connected to the secondary HV dc link 742 to supply low-voltage auxiliary loads. Additionally or alternatively, a two-level inverter can be used to supply LV loads.

The seventh IMD system 700 also includes a seventh ECU 780, which may be similar or identical to the ECU 30, and which is configured to control operation of the seventh MMI 730, the two-level drive 744, and/or the seventh 2-level inverter 750. The seventh ECU 780 may receive signals for monitoring currents and/or voltages in the seventh IMD system 700. The seventh ECU 780 may also send output commands for controlling conductive states of transistors in the seventh MMI 730, the two-level drive 744, and/or seventh 2-level inverter 750.

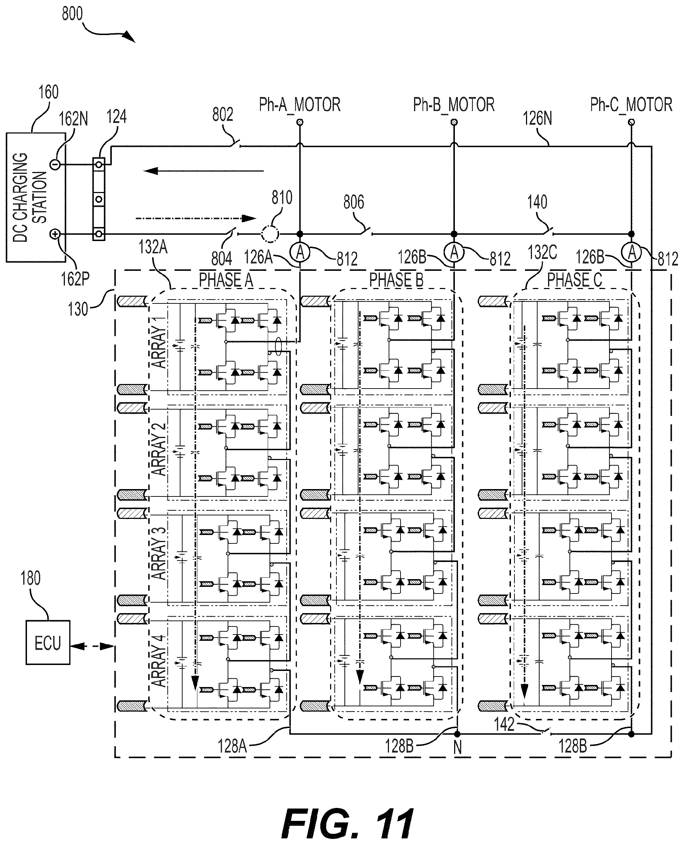

FIG. 11 shows a schematic diagram of an eighth IMD system 800 having a 3-phase MMI with contactors for DC fast charging. The eighth IMD system 800 includes the first MMI 130, which may be similar or identical to the first MMI 130 described elsewhere in the present disclosure. The eighth IMD system 800 may be designed to be used with the DC charging station 160 at 800VDC. Each of the integrated power modules 134 within the first MMI 130 may have battery module 136 with a nominal voltage of approximately 100V.

The eighth IMD system 800 is configured to connect two or more of the three phase groups 132a, 132b, 132c in parallel to operate within a maximum charger voltage limit of the DC charging station 160, which may be, for example, 1000 VDC. As shown, the DC charging station 160 includes a positive terminal 162p and a negative terminal 162n, defining the DC charging voltage therebetween.

The eighth IMD system 800 includes a first DC isolation contactor 802 connected between the negative terminal 162n of the DC charging station 160 and the module neutral conductor 126n of the first MMI 130. The eighth IMD system 800 also includes a second DC isolation contactor 804 connected between the positive terminal 162p of the DC charging station 160 and the a-phase AC output conductor 126a of the first MMI 130. The first DC isolation contactor 802 and the second DC isolation contactor 804 may be controlled together to selectively connect the DC charging station 160 for charging the first MMI 130.

The eighth IMD system 800 includes a third contact 806 configured to selectively connect the a-phase AC output conductor 126a with the b-phase AC output conductor 126b. The third contact 806 may be operated in conjunction with the contactors 140, 142 to selectively connect all of the three phase groups 132a, 132b, 132c in parallel with one another and with the DC charging station 160 for fast charging. During such a parallel connection, the first AC output conductors 126a, 126b, 126c may each be connected together, and therefore no additional isolation contacts may be required to prevent differential voltage from being applied to the windings of the traction motor 26.

The eighth IMD system 800 also includes a voltage sensor 810 arranged to measure a voltage at the a-phase AC output conductor 126a of the first MMI 130. This voltage sensor 810 may confirm a condition of the first DC isolation contactor 802. The eighth IMD system 800 also includes a current sensor 812 at each of the first AC output conductors 126a, 126b, 126c for measuring current to or from each of the three phase groups 132a, 132b, 132c.

When the three phase groups 132a, 132b, 132c of the first MMI 130 are connected in parallel, a maximum current *I_{MAX}* supplied thereto may be 732.6 A, and a maximum voltage of the DC charging station 160 may be < 500 V. The maximum current *I_{MAX}* may be determined in accordance with an equation: *I_{MAX} =* 3.7c x 3p x 66Ah = 732.6 A, where c is the c rating of the battery modules 136, 3p represents number (3) of the three phase groups 132a, 132b, 132c, and 66Ah represents the capacity (in Amp-hours) of the battery modules 136. The maximum charging capability of the first MMI 130 may be 450 A, and the maximum charging capability of the eighth IMD system 800 may be 462 A.

During the charging period, the three phase groups 132a, 132b, 132c are connected in parallel to maintain a corresponding voltage limit lower than the charger voltage (1000V). Maximum DC current *I_{MAX}* drawn from the DC charging station 160 may be 732.6 A, as described above. This arrangement allows utilization of an input maximum charging power of about 350 kW and a total charging energy of about 75 kWh. With the DC charging station 160 capable of supplying such a relatively-high charging current, the eighth IMD system 800 can be charged from about 10% - 80% SoC in about 20 minutes.

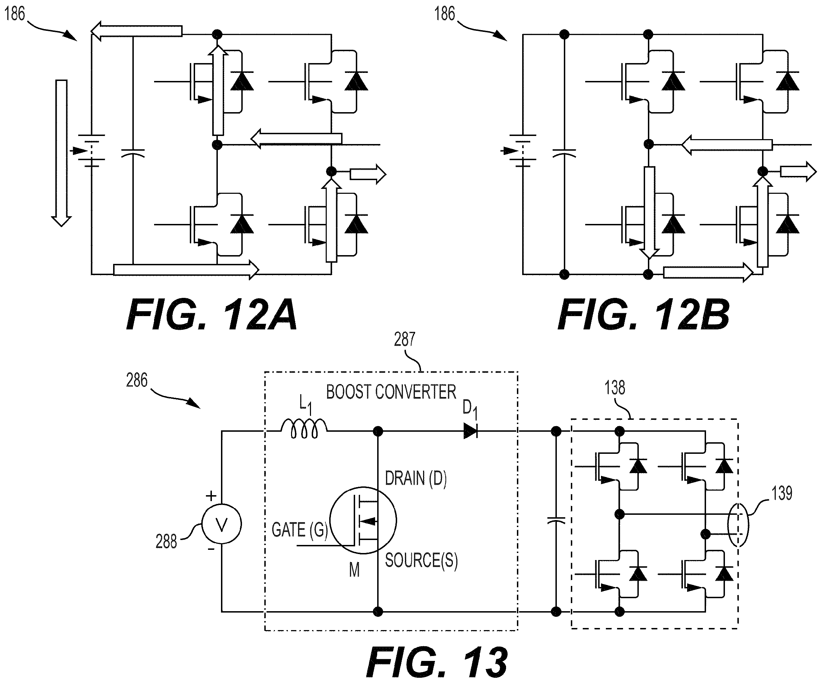

Voltage Control for Charging - For vehicles with a conventional battery pack that have a terminal voltage in the 500V+ range, legacy charging components are required to make the electric vehicle compatible with existing 400V charging infrastructure. For the MMI, a series connection of the three phases could result in a voltage that is higher than the 400V legacy charging infrastructure limit. To remain compatible, the modules can be selectively bypassed by using the full bridge circuitry as shown in FIGs. 12A-12B to reduce the voltage below the maximum limit of the charger, where FIG. 12A illustrates current flow in a battery module 186 of an MMI and operating in an activated mode, and FIG. 12B illustrates current flow in the battery module 186 operating in a bypassed mode. This may enable the MMI to be compatible with existing legacy chargers without additional components. The modules' SOC may be balanced by modulating the activation of the modules to prioritize the modules with the lowest SOC. Additionally, the modules can be continuously modulated with any set frequency to achieve a pulse charging effect of the batteries. Furthermore, the number of activated modules is maximized across the entire SOC range of the batteries. At low SOCs the batteries have a reduced open circuit voltage (OCV), thus more modules are activated within the charger voltage limit to maximize the applied voltage and power of the charger to achieve faster charging of the system.

Multiple Chemistry MMI - The MMI is comprised of multiple battery modules that operate as independent battery systems. Each of the modules have their own battery monitoring IC to balance the series connected cells within the module using passive or active cell balancing. The battery monitoring IC also measures cell voltages and cell current to perform SOC and SOH estimations. Therefore, it is possible to use different battery technologies or energy storage devices for each module in the architecture. The modules are selectively developed with high power or high energy cells to achieve benefits of reduced battery cost, increased range, and faster charging. The utilization of the varying chemistries from module to module is controlled by the governing control to prioritize the use of the high-power modules during acceleration or increased load demand. Alternatively, the energy dense modules are prioritized during regions of low power demand such as steady vehicle speed with reduced acceleration.

The modules can also be designed as a parallel combination of cells with no series connections and use a boost converter to reduce the battery monitoring and balancing requirements of the modules. In this case, the cell voltage is boosted to the appropriate module voltage level for the full bridge converters of the MMI. This also makes the modules chemistry or technology agnostic.

FIG. 13 shows a schematic diagram of a battery module 286 of an MMI having a boost converter 287, according to the present disclosure, and which may enable battery modules with two or more different chemistries to be used in a single MMI. For example, the boost converter 287 may boost a battery voltage of a battery 288 that has a relatively lower voltage than other batteries that are connected directly to a first power electronics assembly 138.

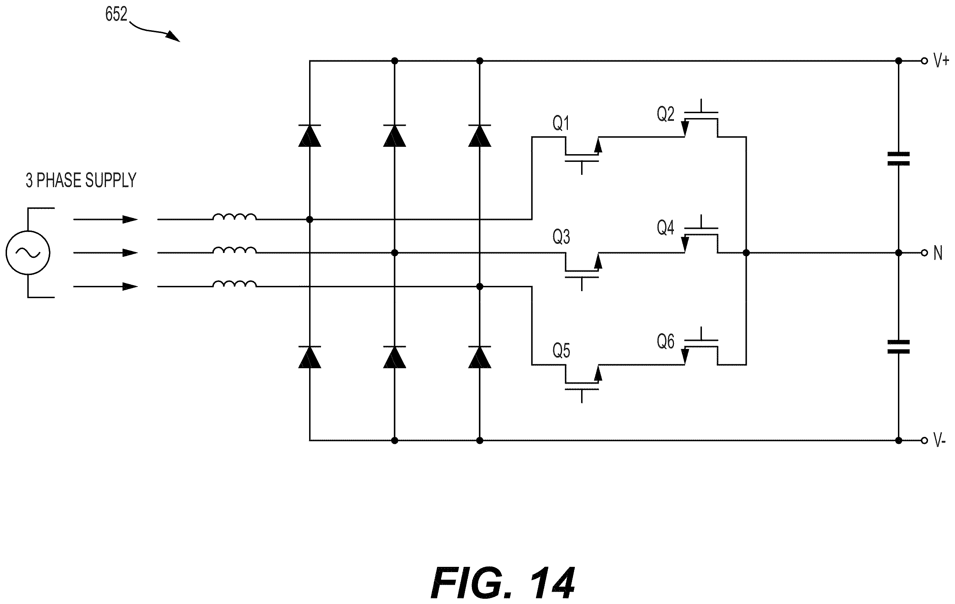

FIG. 14 shows a schematic diagram of a Vienna rectifier 652. The Vienna rectifier 652 of FIG. 14 may be used in the HV to LV converter 650 of the sixth IMD system 600. However, the Vienna rectifier 652 may have a different configuration than what is shown in FIG. 14.

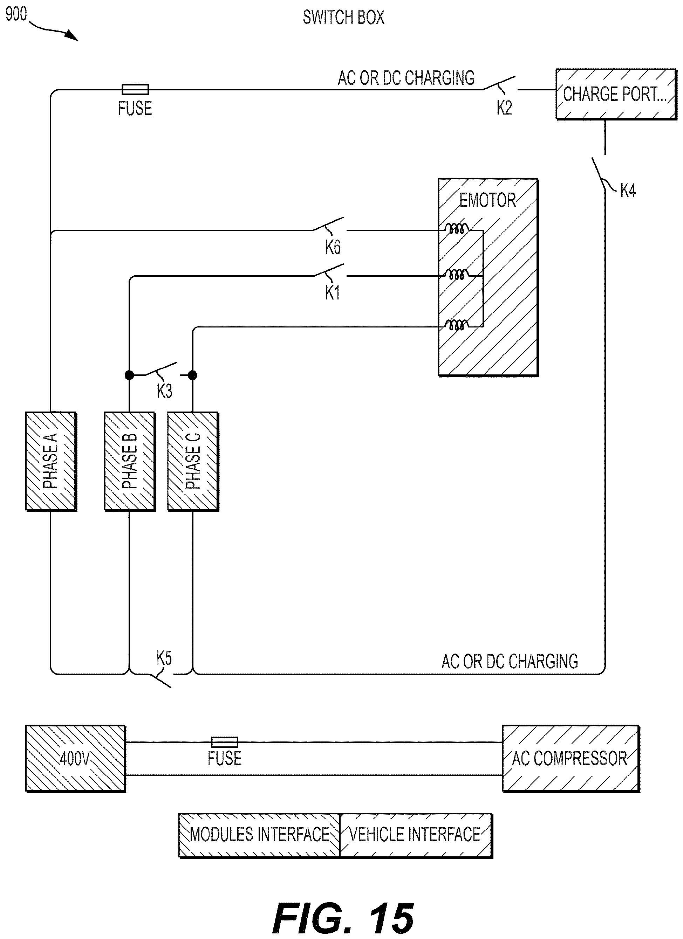

To reduce the number of contactors in the MMI, the present disclosure provides a switchbox configuration as illustrated by the ninth IMD system 900 of FIG. 15. The switchbox may perform the following tasks: connection and disconnection of the system to the eMotor; connection and disconnection of the system to the charging port; and configuration of the phases according to actual needs at any given time.

FIG. 15 provides further details of the contactor configuration that is detailed in other portions of the disclosure. The general IMD architecture remains the same with the 3 phases of modules and full-bridge circuits. However, FIG. 15 focuses on the fuses and contactor configuration for the motor connection in FIG. 2A or the charger supply connection in FIG. 2B. The present disclosure describes logic for opening and closing the contactors to transition between the different operation modes (traction / series charging). The 400V bus at the bottom is the HV bus generated by any of the listed configurations to supply the HVAC motor or other auxiliary HV components.

The contactors K5 and K3 enable the series connection of the three phases in the MMI for charging purposes. K1 and K6 are used to disconnect the eMotor and ensure that no current flows through the machine. K2 and K4 are used to isolate the charger connection from the MMI system. A fuse may be connected in series with the charge port connection to protect from overcurrent or short circuits. Similarly, a fuse may be used on the secondary HV bus to protect from over current or short circuits. The design works with the North American Charging System and other single phase charging protocols. Bidirectional charging is possible with the switchbox configuration and the MMI architecture.

There are two different configurations that are needed to operate the MMI System in an EV - a driving configuration (i.e. operational configuration) and a charging configuration.

Driving Configuration - The driving configuration connects one side of the modules to reach a star configuration. To achieve this the K5 is closed and K3 is opened. To drive the vehicle it is necessary to connect all phases to the eMotor. The connection to the Charge Port must be broken to prevent high voltage at the charge port. To disconnect the Phases from the charging port the K2 and K4 contactors are opened. The contactor status in the driving configuration may be as follows: K1: Closed; K2: Open; K3: Open; K4: Open; K5: Closed; and K6: Closed.

Charging Configuration - The North American Charging Standard supports DC and AC charging on a same set of power connections. AC Charging in North America is conducted with only one phase using 120 or 240V AC. For DC charging with low currents and therefore low losses all phases are connected in series to achieve a high DC voltage. To be able to connect the phases into series it is necessary to break the star point and to connect Phase 2 and Phase 3 in series. To break the Starpoint K5 is opened. To connect Phases 2 and 3 in series, K3 is used. To prevent a short circuit of the phases via the eMotor Starpoint, K1 must be opened before the Serial connection is established. To prevent bypassing any of the phases, K6 is included and must be opened before the charging operation. The contactor status in the charging configuration may be as follows: K1: Open; K2: Closed; K3: Closed; K4: Closed; K5: Open; K6: Open

None of the contactors K1, K2, K3, K4, K5, K6 are intended to be switch under load for changing between the driving configuration and the charging configuration. Thus, there is no requirement for breaking currents and no requirement for normally open or normally closed contacts to be used. Bistable contactors may be used for any or all of the contactors K1, K2, K3, K4, K5, K6, which may provide a reduction in current load during operation when compared with alternative types of switching devices.

The system, methods and/or processes described above, and steps thereof, may be realized in hardware, software or any combination of hardware and software suitable for a particular application. The hardware may include a general-purpose computer and/or dedicated computing device or specific computing device or particular aspect or component of a specific computing device. One or more steps or functions of the provided methods and/or processes may be realized in one or more microprocessors, microcontrollers, embedded microcontrollers, programmable digital signal processors or other programmable devices, along with internal and/or external memory. One or more steps or functions of the provided methods and/or processes may also, or alternatively, be embodied in an application specific integrated circuit, a programmable gate array, programmable array logic, or any other device or combination of devices that may be configured to process electronic signals. It will further be appreciated that one or more of the steps or functions of the provided methods and/or processes may be realized as a computer executable code capable of being stored on a machine-readable medium and/or executed by one or more computing hardware devices.

The computer executable code may be created using a structured programming language such as C, an object oriented programming language such as C++, or any other high-level or low-level programming language (including assembly languages, hardware description languages, and database programming languages and technologies) that may be stored, compiled or interpreted to run on one of the above devices as well as heterogeneous combinations of processors, processor architectures, combinations of different hardware and software, or any other machine capable of executing program instructions.

Thus, in one aspect, each method described above, and combinations thereof may be embodied in computer executable code that, when executing on one or more computing devices performs the steps thereof. In another aspect, the methods may be embodied in systems that perform the steps thereof and may be distributed across devices in a number of ways, or all of the functionalities may be integrated into a dedicated, standalone device or other hardware. In another aspect, the means for performing the steps associated with the processes described above may include any of the hardware and/or software described above. All such permutations and combinations are intended to fall within the scope of the present disclosure.

A processor, controller, microcontroller, electronic control unit, or other computing device or devices should be understood to mean any combination of one or more computing hardware devices, which may operate independently and/or in coordination to perform one or more computing or other data processing functions.

The foregoing description is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. An integrated motor drive (IMD) system, comprising:
a modular multi-level inverter including a plurality of integrated power modules, wherein each of the integrated power modules includes one or more battery cells and a power electronics assembly physically and electrically coupled to the one or more battery cells and configured to generate AC power on a set of load terminals using direct current (DC) power from the one or more battery cells connected to a DC port of the integrated power module,
wherein the plurality of integrated power modules are split between a plurality of phase groups, with each of the phase groups including a corresponding subset of the plurality of integrated power modules, with the sets of load terminals of the corresponding subset of the plurality of integrated power modules connected in a series arrangement between a lower node and an AC output conductor, with the AC output conductors of the plurality of phase groups together arranged to supply the AC power to a motor; and
a two-level inverter connected to the lower nodes of the plurality of phase groups and configured to generate a DC output power on a low-voltage (LV) DC bus.

2. The IMD system of Claim 1, wherein the two-level inverter includes a plurality of high-side switching devices each configured to selectively conduct current between a corresponding one of the lower nodes and a DC high node of the LV DC bus, and wherein the two-level inverter includes a plurality of low-side switching devices each configured to selectively conduct current between a corresponding one of the lower nodes and a DC low node of the LV DC bus; and/or
further including a plurality of sets of contacts configured to selectively connect the AC output conductors and the lower nodes of each of the phase groups in a series configuration of the phase groups between a positive DC terminal and a negative DC terminal of a DC charging station.

3. An integrated motor drive (IMD) system, comprising:
a motor having a plurality of windings each connected to a center terminal;
a modular multi-level inverter including a plurality of integrated power modules, wherein each of the integrated power modules includes one or more battery cells and a power electronics assembly physically and electrically coupled to the one or more battery cells and configured to generate AC power on a set of load terminals using direct current (DC) power from the one or more battery cells connected to a DC port of the integrated power module,
wherein the plurality of integrated power modules are split between a plurality of phase groups, with each of the phase groups including a corresponding subset of the plurality of integrated power modules, with the sets of load terminals of the corresponding subset of the plurality of integrated power modules connected in a series arrangement between a lower node and an AC output conductor, with the AC output conductors of the plurality of phase groups each configured to apply an AC voltage to a corresponding winding of the plurality of windings in the motor and opposite of the center terminal; and
an auxiliary power converter connected between the center terminal of the motor and at least one of the lower nodes of the plurality of phase groups, wherein the auxiliary power converter is configured to supply a DC power to an auxiliary load using an AC input power from the modular multi-level inverter.

4. The IMD system of Claim 3, wherein the auxiliary power converter includes an isolation transformer having a primary winding and two isolated secondary windings,
preferably further including a plurality of sets of contacts configured to selectively connect the AC output conductors and the lower nodes of each of the phase groups in a series configuration of the phase groups between a positive DC terminal and a negative DC terminal of a DC charging station.

5. An integrated motor drive (IMD) system, comprising:
a plurality of DC/DC boost converters; and
a modular multi-level inverter including a plurality of integrated power modules, wherein each of the integrated power modules includes one or more battery cells and a power electronics assembly physically and electrically coupled to the one or more battery cells and configured to generate AC power on a set of load terminals using direct current (DC) power from the one or more battery cells connected to a DC port of the integrated power module,
wherein the plurality of integrated power modules are split between a plurality of phase groups, with each of the phase groups including a corresponding subset of the plurality of integrated power modules, with the sets of load terminals of the corresponding subset of the plurality of integrated power modules connected in a series arrangement between a lower node and an AC output conductor, with the AC output conductors of the plurality of phase groups together arranged to supply the AC power to a motor,
wherein at least one integrated power module of each phase group of the plurality of phase groups includes the one or more battery cells therein connected to an input of a corresponding DC/DC boost converter of the plurality of DC/DC boost converters, and
wherein the plurality of DC/DC boost converters are configured to supply DC power to an auxiliary load.

6. The IMD system of Claim 5, wherein the plurality of DC/DC boost converters each include at least one output port, and wherein the at least one output ports of the plurality of DC/DC boost converters are connected in parallel to form an LVDC bus and for sharing a load of one or more auxiliary components connected thereto; and/or
wherein the plurality of DC/DC boost converters each include at least one output port, and wherein the at least one output ports of the plurality of DC/DC boost converters are connected in series to create a HV DC bus, preferably further including an auxiliary HV to LV DCDC connected to the HV DC bus and configured to supply one or more auxiliary loads at a DC voltage lower than a voltage of the HV DC bus.

7. An integrated motor drive (IMD) system, comprising:
a modular multi-level inverter (MMI) including a plurality of integrated power modules, wherein each of the integrated power modules includes one or more battery cells and a power electronics assembly physically and electrically coupled to the one or more battery cells and configured to generate AC power on a set of load terminals using direct current (DC) power from the one or more battery cells connected to a DC port of the integrated power module,
wherein the plurality of integrated power modules are split between a plurality of phase groups, with each of the phase groups including a corresponding subset of the plurality of integrated power modules, with the sets of load terminals of the corresponding subset of the plurality of integrated power modules connected in a series arrangement between a lower node and an AC output conductor, with the AC output conductors of the plurality of phase groups together arranged to supply the AC power to a motor;
a module neutral conductor connected to the lower node of at least one phase group of the plurality of phase groups; and
an auxiliary power converter connected between the module neutral conductor and at least one of the AC output conductors and configured to receive an AC current therefrom.

8. The IMD system of Claim 7, wherein the at least one of the AC output conductors supplying current to the auxiliary power converter includes the AC output conductors of each of the plurality of phase groups.

9. The IMD system of Claim 7 or 8, wherein the auxiliary power converter includes a half-bridge rectifier between the module neutral conductor and the at least one of the AC output conductors and to create a secondary HV DC link.

10. The IMD system of Claim 9, wherein the auxiliary power converter includes a power converter configured to receive DC power from the secondary HV DC link and to convert the power to an output bus having a different voltage than a voltage of the secondary HV DC link.

11. The IMD system of Claim 7 to 10, wherein the auxiliary power converter includes a Vienna rectifier between the module neutral conductor and the at least one of the AC output conductors and to create a secondary HV DC link.

12. The IMD system of Claim 11, wherein the auxiliary power converter includes an inverter configured to receive DC power from the secondary HV DC link and to convert the power to a different form.

13. The IMD system of any one of Claims 7 to 12, further including a two-level inverter connected to the lower nodes of the plurality of phase groups and configured to generate a DC output power on a low-voltage (LV) DC bus.

14. The IMD system of Claim 13, wherein the two-level inverter includes a plurality of high-side switching devices each configured to selectively conduct current between a corresponding one of the lower nodes and a DC high node of the LV DC bus, and
wherein the two-level inverter includes a plurality of low-side switching devices each configured to selectively conduct current between a corresponding one of the lower nodes and a DC low node of the LV DC bus.

15. The IMD system of any one of Claims 7 to 14, further including a plurality of sets of contacts configured to selectively connect the AC output conductors and the lower nodes of each of the phase groups in a series configuration of the phase groups between a positive DC terminal and a negative DC terminal of a DC charging station and/or in a parallel configuration of the phase groups between a positive DC terminal and a negative DC terminal of a DC charging station.
